# EUROPÄISCHE PATENTSCHRIFT

(11) **EP 1 715 229 B1**
(45) Veröffentlichungstag und Bekanntmachung des Hinweises auf die Patenterteilung: **21.10.2009**
(21) Anmeldenummer: 06002520.2
(22) Anmeldetag: 08.02.2006
(51) Int. Cl.: F16K 31/02

(54) **Ventilanordnung**
Valve assembly
Dispositif de soupape

(30) Priorität: 22.04.2005 DE 102005018730
(43) Veröffentlichungstag der Anmeldung: 25.10.2006
(60) Teilanmeldung: 09010697.2
(73) Patentinhaber: Karl Dungs GmbH & Co.KG, 73660 Urbach (DE)
(72) Erfinder: Mattes, Gerd, 73614 Schorndorf (DE)
(74) Vertreter: Rüger, Barthelt & Abel Patentanwälte

(56) Entgegenhaltungen:
- EP-A- 1 126 218
- EP-A1- 1 158 182
- EP-A2- 0 354 123
- WO-A-89/04935
- DE-A1- 3 315 972

## Beschreibung

Die Erfindung betrifft eine Ventilanordnung, die sich insbesondere für Gasanwendungen eignet.

Zum Steuern von Fluidflüssen werden häufig Servoventile eingesetzt, die von einem Pilotventil gesteuert werden. Eine solche Ventilanordnung ist beispielsweise der DE 100 06 600 B4 zu entnehmen. Diese Ventilanordnung weist ein Hauptventil mit einem Ventilverschlussglied auf, dem ein Ventilsitz zugeordnet ist. Eine Feder spannt das Ventilverschlussglied gegen den Ventilsitz. Zum Öffnen dieses Hauptventils dient eine fluidbetätigte Antriebseinrichtung in Form einer in einem Gehäuse angeordneten Membran, die über eine Ventilstange mit dem Ventilverschlussglied verbunden ist. Zur kontrollierten und gesteuerten Druckbeaufschlagung der Membran und zur Erzeugung einer das Hauptventil öffnenden Kraft ist ein elektromagnetisches Pilotventil vorgesehen, das als Umschaltventil ausgebildet ist. Es verbindet entweder die beiden von der Membran in dem Gehäuse abgeteilten Kammern miteinander oder in seiner anderen Schaltlage eine der Kammern mit der Abströmseite des Ventils. Auf diese Weise lässt sich die Ventilanordnung mit kleinen elektrischen Leistungen öffnen oder schließen. Jedoch muss zur Offenhaltung der Ventilanordnung der Elektromagnet des Pilotventils ständig bestromt werden. Auch wenn hier eine Haltestromabsenkung durchgeführt wird, führt dies zu einer nicht vernachlässigbaren Leistungsaufnahme. Diese kann auch nicht beliebig vermindert werden. Aus Sicherheitsgründen muss das Pilotventil bei Stromausfall sicher in die zur Bewirkung der Schließlage der Ventilanordnung erforderliche Position schalten. Dazu ist eine entsprechende Rückstellfeder erforderlich, die in der Lage ist, alle Remanenzkräfte, die in einem Magnetkreis auftreten können, sicher zu überwinden. Entsprechend groß muss dann der Haltestrom des Pilotventils bemessen sein, um im angesteuerten Zustand wiederum die Schließfeder zu überwinden.

Des Weiteren gestattet eine solche Ventilanordnung keine Modulation des Gasflusses. Vielmehr handelt es sich um ein Auf/Zu-Ventil mit dem sich Zwischenwerte nicht dauerhaft einstellen lassen. Sollen Gasgeräte mit wechselndem Leistungsbedarf durch ein solches Ventil gesteuert werden, sind zusätzliche Modulationsventile erforderlich.

Die DE 33 15 972 C2 offenbart ein magnetisch betätigtes Fluidventil für automatische Tanksäulen, bei dem das Pilotventil in einem bestimmten Betriebszustand schwingt. Wenn dies der Fall ist, bleibt das Hauptventil geschlossen, so dass nur der reduzierte Fluidstrom durch den Bypasskanal bestehen bleibt.

Die EP 1 158 182 A1 offenbart ein Ventil mit einem Piezobalken als Antrieb. Dieser ist in einem Gehäuse an einem Ende eingespannt. Mit seinem anderen Ende betätigt er eine Wippe, die entweder einen ersten Kanal oder einen zweiten Kanal freigibt, um entweder den ersten oder den zweiten Kanal mit einem dritten Kanal zu verbinden. Bei Ausfall des Piezobalkens bleibt entweder der erste oder der zweite Kanal dauernd offen.

Die WO 89/04935 beschreibt ein magnetisch betätigte Umschaltventil, was ebenfalls einen zentralen Kanal alternativ mit einem oder einem anderen Kanal verbindet und somit in jeder Schaltposition einen Flussweg freigibt.

Davon ausgehend ist es Aufgabe der Erfindung, eine verbesserte Ventilanordnung zu schaffen, die die oben genannte Ventilanordnung wenigstens in einer Hinsicht verbessert.

Diese Aufgabe wird durch die erfindungsgemäße Ventilanordnung wie auch durch das erfindungsgemäße Ventilansteuerverfahren gelöst:

Die erfindungsgemäße Ventilanordnung weist ein als Piezoventil ausgebildetes Pilotventil auf, das zum Öffnen des Hauptventils von einer Steuereinrichtung mit einer Wechselspannung beaufschlagt wird. Dies stellt per se ein Sicherheitsmerkmal dar. Ein Fehler in der Steuereinrichtung führt mit einiger Sicherheit zum Wegfall der Ausgangswechselspannung. Wird diese über ein potentialtrennendes Element, beispielsweise einen Übertrager (Transformator) oder einen Koppelkondensator, zu dem piezoelektrischen Betätigungsorgan geleitet, können bei Auftreten eines elektrischen Fehlers beispielsweise anliegende Dauergleichspannungen nicht zu dem piezoelektrischen Betätigungsorgan gelangen und dieses in Daueröffnungsposition überführen. Nur Wechselspannungssignale können somit die Öffnung des Pilotventils und entsprechend die Öffnung des Hauptventils bewirken. Die Frequenz der Wechselsignale wird vorzugsweise wenigstens so groß gewählt, dass das angeschlossene Servoventil durch das Pulsieren des Pilotventils und des Pilotgasflusses verursachte Schwingungen integriert, d.h. diesen nicht mehr oder nicht mehr in relevanter Weise folgt.

Die Nutzung eines Pilotventil mit piezoelektrischem Betätigungsorgan bietet einen weiteren Vorzug: die zum Öffnen und Schließen des Pilotventils erforderlichen Leistungen sind sehr gering. Somit sinkt der Leistungsbedarf der Ventilanordnungen was Anwendungen mit Batteriebetrieb ermöglicht. Außerdem sinkt mit der aufgenommenen Verlustleistung auch die in dem Ventil erzeugte Wärme, was einer Miniaturisierung der Bauform entgegenkommt.

Der Betrieb des Pilotventils mit Wechselspannung eröffnet die Möglichkeit, das Hauptventil nicht nur als Auf/Zu-Ventil sondern darüber hinaus als Modulationsventil zu nutzen, mit dem sich zwischen der Offenstellung und der Schließstellung verschiedene Zwischenpositionen einstellen lassen. Bei entsprechender stufenloser Verstellung des Ansteuersignals des Pilotventils kann somit eine stufenlose Verstellung des Hauptventils erreicht werden. Zur Verstellung des Durchlasses des Pilotventils ist es möglich, die Ansteueramplitude der Wechselspannung oder deren Frequenz zu ändern. Es wird jedoch bevorzugt, mit konstanter Frequenz und Amplitude und Rechtecksignalen zu arbeiten, deren Tastverhältnis einem Vorgabesignal entsprechend geändert wird. Über das Puls-Pause-Verhältnis der das Pilotventil ansteuernden Wechselspannung lässt sich somit der Pilotfluidfluss und somit auch die Öffnung des Hauptventils steuern. Dieses ist somit als Modulationsventil einsetzbar, wobei es dennoch seine Funktion als Gassicherheitsventil wahrnehmen kann. Dies insbesondere, wenn es durch eine Schließfeder normalerweise in Schließstellung gehalten und nur durch aktive Öffnung des Pilotventils durch Ansteuerung desselben mit einem Wechselsignal aktiviert, d.h. in Offenstellung überführt werden kann. Eine solche Ventilanordnung kann beispielsweise im Rahmen einer Regeleinrichtung als Druckregler oder als Durchflussregler betrieben werden, um einen gewünschten konstanten Gasdruck oder einen gewünschten vorgegebenen Gasfluss zu erzeugen. Dazu wird die Steuereinrichtung mit einem an geeigneter Stelle platzierten Druckfühler oder Durchflussmesser verbunden.

Wenn die Wechselspannung eine Rechtecksignalform aufweist, lässt sich das entsprechende Wechselspannungssignal auf einfache Weise und verlustarm erzeugen. Wenn darüber hinaus mit einer konstanten, vorzugsweise oberhalb der Tonfrequenz liegenden Frequenz gearbeitet wird, ist der Betrieb des Pilotventils unhörbar. Außerdem folgen die Öffnungs- und Schließintervalle des piezoelektrischen Betätigungsorgans in einer so hohen Geschwindigkeit, dass der Pilotfluidfluss gleichmäßig ist und die Antriebseinrichtung des Hauptventils nicht vibriert. Letztendlich wird dies erreicht, indem die Antriebseinrichtung einen mechanischen Tiefpass bildet, wobei die Arbeitsfrequenz des Pilotventils weit oberhalb von dessen Eckfrequenz liegt.

Die Modulation des Pilotventils und somit auch der Öffnung des Hauptventils durch Modulation des Tastverhältnisses der Wechselspannung kann in Stufen, quasi stufenlos oder vollkommen stufenlos erfolgen. Dies lässt sich mit digitalen Mitteln verlustarm erreichen und kann beispielsweise durch einen Mikrocomputer durchgeführt werden.

Vorzugsweise ist dem piezoelektrischen Betätigungsorgan ein Bauelement parallel geschaltet, das einen galvanischen Stromfluss zulässt. Im einfachsten Falle kann dazu ein Widerstand genutzt werden, der im Fehlerfalle auf dem Piezoelement sitzende Ladungen abführt. Ein solcher Widerstand ist jedoch immer mit Leistungsverlusten verbunden. Ist das piezoelektrische Pilotventil so ausgebildet, dass bauartbedingt ein Gasfluss nur zustande kommen kann, wenn das piezoelektrische Betätigungsorgan schwingt, kann auf einen zu dem piezoelektrischen Betätigungsorgan parallelen Strompfad verzichtet werden. Ist eine solche bauartbedingte Sicherheit jedoch nicht gegeben, kann es vorteilhaft sein, dem piezoelektrischen Betätigungsorgan ein induktives Bauelement, beispielsweise eine Spule, parallel zu schalten. Vorzugsweise bildet diese mit dem piezoelektrischen Bauelement einen Parallelschwingkreis, dessen Resonanzfrequenz geringer ist als die Frequenz der ansteuernden Wechselspannung oder mit dieser übereinstimmt. Dadurch wird erreicht, dass nur ein geringer parasitärer Stromfluss durch das induktive Bauelement auftritt und die elektrischen Verluste gering gehalten werden. Im Resonanzfall wird der Speisestrom, den die Steuereinrichtung aufbringen muss, besonders gering und frei von Blindleistung. Außerdem können relativ hohe Schwingamplituden an dem piezoelektrischen Betätigungselement mit geringen Steuerströmen erreicht werden. Im Fehlerfalle bewirkt die Spule jedoch eine sofortige Entladung des piezoelektrischen Betätigungsorgan, d.h. dessen Kurzschluss, so dass es praktisch augenblicklich in seinen entspannten Zustand zurückkehrt. Wird das Pilotventil so ausgelegt, dass es nur schwingt, wenn es mit der angeschlossenen Spule in elektrischer Resonanz steht, muss außerdem die Ansteuerfrequenz relativ gut mit der Resonanzfrequenz übereinstimmen, um das Pilotventil zu öffnen. Dies hat den Vorteil zusätzlicher Sicherheit für sich. Das Pilotventil bleibt geschlossen, wenn keine Spannung anliegt, wenn irgendeine Spannung anliegt oder wenn eine Schwingung mit von der Resonanzfrequenz abweichender Frequenz anliegt. Ein Fehlerfall, bei dem zufälliger- aber unerwünschterweise gerade die Resonanzfrequenz erzeugt wird ist sehr unwahrscheinlich.

Das piezoelektrische Bauelement ist vorzugsweise ein Biegeschwinger. Mit diesem lässt sich bei einer Schwingfrequenz von einigen zehn Kilohertz ein ausreichender Hub erzielen, um zur Ansteuerung von Gasventilen geeignete Gasflüsse freizugeben. Es lassen sich damit Gasventile erstellen, die zur Steuerung von Gasflüssen im Bereich von wenigen Kilowatt bis zu über hundert Kilowatt geeignet sind.

Als Biegeschwinger kann ein herkömmlicher piezokeramischer Streifen oder Balken dienen, dessen Flachseiten Elektroden tragen. Zur Erzielung größerer Hübe kann es vorteilhaft sein, anstelle eines herkömmlichen Biegeschwingers einen Biegeschwinger vorzusehen, der ein im Wesentlichen längenunveränderliches Element und parallel zu diesem angeordnet und mit diesem verbunden einen längerveränderlichen Piezostapel aufweist. Diese Anordnung hat den Vorzug, mit geringen Ansteuerspannungen hohe Auslenkungen zu erreichen, so dass relativ große Pilotgasflüsse steuerbar sind.

Bei einer besonders bevorzugten Ausführungsform weist das Pilotventil zwei alternierend freigebbare Ausgänge auf, die im Ruhezustand des Pilotventils, d.h. ohne Ansteuerung desselben, beide geschlossen sind. Durch Ansteuerung des piezoelektrischen Betätigungsorgans mit positiver oder negativer Polarität wird entweder nur der eine oder nur der andere Ausgang freigegeben. Beide Ausgänge können somit nicht gleichzeitig sondern nur zeitlich verschachtelt, d.h. abwechselnd freigegeben werden. Dies wird beispielsweise erreicht, indem beide Ausgänge des Pilotventils von ein und demselben piezoelektrischen Betätigungsorgan, beispielsweise Biegeschwinger, gesteuert werden, der sich bei Ansteuerung abwechselnd in die eine oder die andere Richtung wölbt. Trägt er zwei Ventilverschlussglieder, z.B. eines an seinem freien Ende und ein anderes etwa mittig auf der gleichen Seite, können durch diese beiden Ventilverschlussglieder die entsprechend zugeordneten Ausgänge abwechseln freigegeben werden, wenn der Biegeschwinger schwingt. Mit einem solchen Pilotventil lassen sich beispielsweise zwei hintereinander angeordnete Hauptventile ansteuern. Beide Hauptventile erhalten nur dann Gas wenn der Biegeschwinger schwingt. Die beiden Ausgänge des Pilotventils liefern dann in schneller Folge intermittierend kleine Gasportionen, die sich jeweils zu einem Pilotgasstrom zur Ansteuerung des ersten sowie des zweiten Hauptventils vereinen. Fällt die Schwingung aus oder bleibt das Pilotventil in einer Stellung stehen, weil beispielsweise eine Gleichspannung auf das piezoelektrische Betätigungsorgan gelangt, steht an höchstens einem der Ausgänge des Pilotventils Gas an, so dass höchstens eines der beiden Hauptventile offen bleibt. Mit Sicherheit schließt das andere. Somit ist selbst bei einem katastrophalen Fehlerfall, der zu einem Totalausfall des Pilotventils führt, wenigstens eines der in Reihe geschalteten Hauptventile geschlossen. Somit bietet die erfindungsgemäße Ventilanordnung die nur öffnet, wenn das piezoelektrische Betätigungsorgan des Pilotventils schwingt, eine äußerst hohe Sicherheit.

Des Weiteren können die beiden in Reihe liegenden Hauptventile durch das oszillierend umschaltende Pilotventil getrennt voneinander pulsweitenmoduliert angesteuert werden. Dazu wird beispielsweise eine bipolare Wechselspannung verwendet, deren positive wie deren negative Welle unabhängig voneinander pulsweitenmoduliert werden können. Damit lassen sich die beiden in Reihe angeordneten Hauptgasventile unabhängig voneinander steuern, wodurch beispielsweise ein sehr großer Regelbereich, Zündgasbetrieb oder andere Betriebsarten realisiert werden können. Beispielsweise kann das erste Ventil als Druckregler und das zweite als Modulationsventil genutzt werden.

Es ist auch möglich, den beiden piezogesteuerten Hauptventilen ein magnetisch betätigtes Auf/Zu-Ventil vor oder nachzuschalten oder eines der Hauptventile durch ein solches zu ersetzen. Damit können die bekannten und anerkannten Sicherheitseigenschaften preisgünstiger Magnetventile mit den Möglichkeiten der guten Regelbarkeit der piezogesteuerten Servoventile verbunden werden. Z.B. liefert das Magnetventil die Einstufung in die gewünschte Sicherheitsklasse und mit dem durch das Piezo-Pilotventil gesteuerten Hauptventil(en) lasst sich der gewünschte Gasdruck und/oder der gewünschte Durchfluss einstellen.

Bei einer abgewandelten Ausführungsform des Pilotventils dient der von dem Gehäuse des Pilotventils umschlossene Innenraum als Puffer. In das Gehäuse führt ein Eingang, dem ein Ventilverschlussglied zugeordnet ist. Aus dem Gehäuse führt ein Ausgang heraus, dem ebenfalls ein Ventilverschlussglied zugeordnet ist. Beide Ventilverschlussglieder werden z.B. von ein und demselben Piezoelement bewegt, wobei beide Ventilverschlussglieder auf ihrem jeweiligen Ventilsitz aufsitzen, wenn das Betätigungsorgan nicht angesteuert d.h. entspannt und in Ruhe ist. Das Betätigungsorgan ist vorzugsweise ein Biegeschwinger. Weil beide Ventilverschlussglieder voneinander beabstandet an dem Biegeschwinger angeordnet sind, kann der Eingang geöffnet werden, wenn sich der Biegeschwinger nach einer Richtung wölbt während der Eingang geschlossen und der Ausgang geöffnet wird, wenn sich das Betätigungsorgan in Gegenrichtung wölbt. Auf diese Weise können abwechselnd nur der Eingang oder der Ausgang freigegeben werden. Wenn ein solches Pilotventil eingangsseitig mit Gasdruck beaufschlagt wird, wird bei jeder Öffnung des Eingangs eine kleine Gasportion in den Innenraum eingelassen und bei Schließen des Eingangs und Öffnen des Ausgangs diese Gasportion aus dem Ausgang wieder ausgelassen. Durch die Größe d.h. das Fassungsvolumen des Innenraums des Gehäuses des Pilotventils und den anstehenden Gasdruck werden die Größen der einzelnen durchgelassenen Gasportionen gesteuert.

Ein solches Pilotventil kann zum direkten Steuern kleiner Gasflüsse wie auch zum Ansteuern von Servoventilen genutzt werden. Es hat den Vorzug, dass es nur Gas durchlässt, wenn das Betätigungsorgan schwingt. Eine Auslenkung des Betätigungsorgans nur in der einen oder nur in der anderen Richtung bewirkt keinen dauerhaften Gasfluss sondern nur das Einlassen oder Auslassen einer minimalen Gasportion. Durch Beeinflussung der Schwingfrequenz und/oder des Tastverhältnisses des Ansteuersignals des Betätigungsorgans kann die Größe des Gasflusses reguliert werden. In diesem Sinne ist das Ventil auch als Gaszähler zu nutzen. Bei gegebenem Gasdruck entspricht die Anzahl von Schwingungszyklen einer durchgelassenen Gasmenge. Ein elektronischer Zähler, der an die Ansteuerwechselspannung des Ventils angeschlossen ist, zeigt somit einen der durchgelassenen Gasmenge proportionalen Wert an.

Weitere Einzelheiten vorteilhafter Ausführungsformen der Erfindung ergeben sich aus der Zeichnung, der Beschreibung oder aus Ansprüchen. In der Zeichnung sind Ausführungsbeispiele der Erfindung veranschaulicht. Es zeigen:
- Figur 1: eine nicht zur Erfindung gehörige Ventilanordnung als schematische Übersichtsdarstellung,
- Figur 2: eine Ventilanordnung gemäß Figur 1 in schematisierter Schnittdarstellung im Schließzustand,
- Figur 3: die Ventilanordnung nach Figur 2 in schematisierter Schnittdarstellung in offenem Zustand,
- Figur 4: das Pilotventil der Ventilanordnungen nach Figur 1 bis 3 in schematisierter längs geschnittener Darstellung im Ruhezustand,
- Figur 5 und 6: das Pilotventil nach Figur 4 in schematisierter längs geschnittener Darstellung in verschiedenen Schwingungsphasen,
- Figur 7: eine abgewandelte, nicht zur Erfindung gehörige Ventilanordnung mit Pilotventil und zwei Hauptventilen in schematisierter längs geschnittener Darstellung im Zündgasbetrieb,
- Figur 8: ein abgewandeltes nicht zur Erfindung gehöriges Pilotventil mit zwei gesonderten piezoelektrischen Betätigungsorganen in längs geschnittener schematisierter Darstellung,
- Figur 9: ein piezoelektrisches Betätigungsorgan in ausschnittsweiser schematisierter Darstellung,
- Figur 10: eine elektrische Resonanzschaltung mit einem piezoelektrischen Betätigungsorgan als Schaltbild,
- Figur 11 u. 12: verschiedene Ansteuersignale für das piezoelektrische Betätigungsorgan des Pilotventils nach den Figuren 4 bis 6,
- Figur 13: eine Ausführungsform eines erfindungsgemäßen Pilotventils zur Steuerung kleiner Gasflüsse,
- Figur 14: das Ventil nach Figur 13 in einer ersten Schwingphase und
- Figur 15: das Ventil nach Figur 14 in einer zweiten Schwingphase.

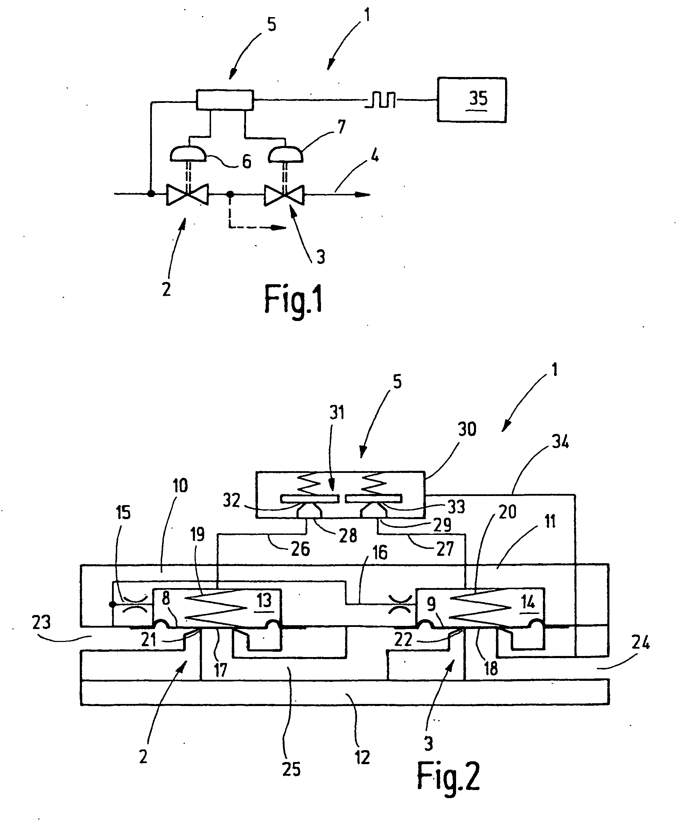

In Figur 1 ist.eine Ventilanordnung 1 veranschaulicht, die prinzipiell zur Steuerung verschiedener fluider Medien, insbesondere aber zur Steuerung eines Gasflusses einsetzbar ist. Zu der Ventilanordnung 1 gehören zumindest ein, vorzugsweise aber zwei Hauptventile 2, 3, die in einer Leitung 4 hinter einander angeordnet sind. Die Hauptventile 2, 3 sind von einem gemeinsamen Pilotventil 5 gesteuert, das als gesonderte Baugruppe ausgebildet oder mit einem der Hauptventile 2, 3 oder mit beiden Hauptventilen 2, 3 zu einer Baugruppe vereinigt sein kann. Die Hauptventile 2, 3 können beispielsweise in einem gemeinsamen Gehäuse untergebracht sein. Sie sind jeweils als so genannte Servoventile ausgebildet und weisen dazu jeweils eine Antriebseinrichtung 6, 7 auf, die, wie Figur 2 zeigt, durch eine Membran 8, 9 gebildet sein kann. Die Membran 8, 9 ist in einem Gehäuse 10, 11 angeordnet. Dieses kann, wie in Figur 2 schematisch veranschaulicht, Teil eines Ventilgehäuses 12 sein. Die Gehäuse 10, 11 können jedoch auch von dem Ventilgehäuse 12 abgesetzt sein. Die Membranen 8, 9 teilen in den Gehäusen 10, 11 jeweils zumindest eine Arbeitskammer 13, 14 ab, die über Fluidkanäle 15, 16 gedrosselt mit einem zu den Hauptventilen 2, 3 stromaufwärts liegenden Abschnitt der Leitung 4 verbunden sind.

Die Membranen 8, 9 sind beispielsweise über Schubstangen oder Ventilspindeln jeweils mit einem Ventilverschlussglied 17, 18 verbunden. Alternativ können die Ventilverschlussglieder 17, 18, wie Figur 2 veranschaulicht, durch einen zentralen Abschnitt oder Teil der Membran 8, 9 oder ein unmittelbar mit der Membran 8, 9 verbundenes Teil gebildet sein.

Des Weiteren sind Ventilschließfedern 19, 20 vorgesehen, die die Ventilverschlussglieder 17, 18 gegen Ventilsitze 21, 22 vorspannen. Somit ist der Weg von dem Eingang 23 zu dem Ausgang 24 der Ventilanordnung 1 durch zwei Hauptventile 2, 3 versperrt. Zwischen den Hauptventilen 2, 3 ist eine Zwischenkammer 25 ausgebildet. In oder an dieser können geeignete, nicht weiter dargestellte Sensoren angebracht sein. Z.B. kann ein Durchflusssensor dazu dienen, den Durchfluss zu erfassen. Anhand des erfassten Durchflusswertes lässt sich mit dem Ventil 3 beispielsweise ein gewünschter Durchflusswert einregulieren.

Es ist auch möglich, den Druck in der Kammer 25 zu erfassen und mit dem Ventil 2 auf einen gewünschten, z.B. zeitlich konstanten Wert auszuregeln. Ein gewünschter Durchfluss kann dann z.B. mit dem Ventil 3 eingestellt werden, indem dieses gemäß seiner bekannten Kennlinie auf einen entsprechenden Öffnungswert eingestellt wird. Bei entsprechend genauer Druckregelung in der Kammer 25 und genau bekannter und zugrundegelegter, z.B. gespeicherter Kennlinie lässt sich der gewünschte Durchfluss dann mit dem Ventil 3 ziemlich genau regulieren oder einstellen.

Die Arbeitskammern 13, 14 sind über geeignete Leitungen oder Kanäle 26, 27 mit einem ersten und einem zweiten Eingang 28, 29 des Pilotventils 5 verbunden. Dieses weist ein Gehäuse 30 auf, in dem ein oder mehrere piezoelektrische Betätigungsorgane 31 angeordnet sind. Diese liegen mit einem als Ventilverschlussglied ausgebildeten Flächenbereich 32, 33 an Ventilsitzen an, die den Eingängen 28, 29 zugeordnet sind. Die den Betätigungsorganen 31 eigene Federwirkung ist in Figur 2 durch ein Federsymbol veranschaulicht. Aus dem Gehäuse 30 führt ein Kanal heraus, der über eine Leitung 34 mit der Abströmseite der Ventilanordnung 1, d.h. dem Ausgang 24 verbunden ist.

Die Ventilanordnung 1 ist an eine Steuereinrichtung 35 angeschlossen, die das piezoelektrische Betätigungsorgan 31 ansteuert. Letzteres ist beispielsweise ein Biegeschwinger, der von der Steuereinrichtung 35 zum Öffnen der Hauptventile 2, 3 mit einer Wechselspannung versorgt wird. Dies gilt sowohl wenn die Flächen 32, 33 an ein und demselben piezoelektrischen Betätigungsorgan 31 wie auch wenn sie an gesonderten Betätigungsorganen vorgesehen sind.

In beiden Fällen werden das oder die Betätigungsorgane so angesteuert, dass sich die Flächen 32, 33 gegensinnig bewegen, d.h. dass die Eingänge 28, 29 abwechselnd freigegeben werden.

Die insoweit beschriebene Ventilanordnung 1 arbeitet wie folgt:

Im Ruhezustand, wenn die Steuereinrichtung 35 keine Spannungssignale abgibt, liegen beide Flächen 32, 33 des einen oder der beiden Betätigungsorgane 31 an den jeweils zugeordneten Ventilsitzen an und verschließen somit die Eingänge 28, 29. Die Arbeitskammern 13, 14 sind somit zu dem Ausgang 24 hin abgesperrt. Über die Fluidkanäle 15, 16 sind sie hingegen mit Fluiddruck beaufschlagt, der zu den Ventilschließfedern 19, 20 gleichsinnig wirkt. Somit sitzen beide Ventilverschlussglieder 17, 18 schließend auf den Ventilsitzen 21, 22 auf. Die Ventilanordnung 1 ist geschlossen.

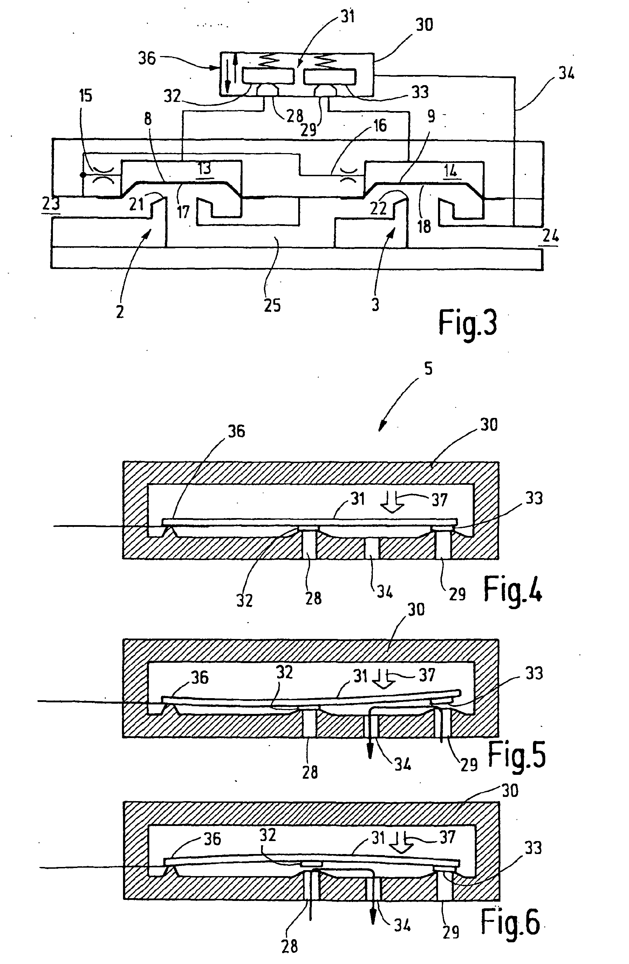

Zum Öffnen der Ventilanordnung 1 gibt die Steuereinrichtung 35 ein Wechselspannungssignal an das Betätigungsorgan 31 (oder die Betätigungsorgane, falls mehrere vorhanden sind), so dass diese schwingen. Dies ist in Figur 3 schematisch durch Pfeile 36 veranschaulicht. Die Flächen 32, 33 heben somit periodisch von ihren jeweiligen Ventilsitzen ab. Das Betätigungsorgan 31 oszilliert dabei vorzugsweise mit einer Frequenz oberhalb 20 kHz oder unterhalb 20 Hz oder 16 Hz unhörbar, d.h. mit einer Ultraschall- oder Infraschallfrequenz. Somit werden die Eingänge 28, 29 freigegeben, d.h. über die Leitung 34 mit dem Ausgang 24 verbunden. Der Strömungswiderstand des so freigegebenen Kanals ist gering, jedenfalls geringer als die Strömungswiderstände der Kanäle 15, 16. Dadurch fällt der Gasdruck in den Arbeitskammern 13, 14 ab und der über den Eingang 23 anliegende Fluiddruck kann die Membranen 8, 9 in Öffnungsrichtung bewegen. Die Ventilverschlussglieder 17, 18 heben von ihren Ventilsitzen 21, 22 ab und geben den Gasfluss frei.

Durch Beeinflussung des Tastverhältnisses der Schwingung, die von dem Betätigungsorgan 31 (oder den Betätigungsorganen 31) vollführt wird, kann der Abströmwiderstand variiert werden, mit dem Fluid oder Gas aus den Arbeitskammern 13, 14 abströmt. Auf diese Weise kann die Position der Ventilverschlussglieder 17, 18 gezielt einreguliert werden, um den Gasfluss weder ganz freizugeben noch ganz zu sperren sondern in gewünschter Weise zu drosseln, um beispielsweise einen konstanten Gasdruck oder einen konstanten Gasfluss zu erzielen. Ist an die Zwischenkammer 25 ein Drucksensor angeschlossen, kann das Hauptventil 2 als Druckregler zur Konstanthaltung des Gasdrucks in der Zwischenkammer 5 genutzt werden. Das in Strömungsrichtung folgende Hauptventil 3 kann dann beispielsweise als Mengenregler genutzt werden, um ausgehend von einem konstanten Vordruck in der Zwischenkammer 25 den Gasfluss zu regulieren.

Figur 4 veranschaulicht eine bevorzugte Ausführungsform des Pilotventils 5. Das Betätigungsorgan 31 wird durch einen Piezobiegeschwinger gebildet, der an einem Ende 36 mit dem Gehäuse 30 verbunden und dort beispielsweise fest eingespannt ist. Der Piezoschwinger wird beispielsweise durch einen schmalen flachen Streifen aus piezokeramischem Material gebildet. Er ist mit Elektroden versehen und dabei so ausgebildet, dass er sich bei Beaufschlagung mit einer Spannung einer ersten Polarität, wie Figur 5 veranschaulicht, in einer ersten Richtung wölbt, während er sich bei Anschluss einer Spannung mit umgekehrter Polarität in Gegenrichtung wölbt, wie Figur 6 veranschaulicht.

Die Flächen 32, 33 sind beispielsweise an kleineren Vorsprüngen ausgebildet, die an einer gemeinsamen Flachseite des Betätigungsorgans 31 angeordnet sind. Sie verschließen die Eingänge 28, 29 wenn das Betätigungsorgan 31 spannungsfrei ist. Dieser Zustand ist in Figur 4 veranschaulicht.

Wird das Betätigungsorgan 31 an eine Spannung einer ersten Polarität angeschlossen, hebt die Fläche 33 von dem zugeordneten Ventilsitz ab und der Eingang 29 wird freigegeben. Dabei stützt sich das piezoelektrische Betätigungsorgan 31 mit der Fläche 32 an dem Ventilsitz des Eingangs 28 ab, der somit geschlossen bleibt.

Wird das piezoelektrische Betätigungselement 31 mit einer gegensinnigen Spannung beaufschlagt, wölbt es sich in Gegenrichtung. Es stützt sich nun mit seiner Fläche 33 an dem Ventilsitz des Eingangs 29 ab, während die Fläche 32 von dem Ventilsitz des Eingangs 28 abhebt. Somit wird der Eingang 28 freigegeben während der Eingang 29 geschlossen bleibt.

Das Betätigungsorgan 31 ist mit einer Vorspannung in Richtung auf die Eingänge 28, 29 zu gespannt. Diese Vorspannung wird in Figur 4, 5 und 6 durch einen Pfeil 37 symbolisiert. Je nach Ansteuerungsrichtung wird die Vorspannung somit über die Fläche 32 oder die Fläche 33 abgestützt. Liegt keine Ansteuerung vor, wird die Vorspannung gemäß Pfeil 37 über beide Flächen 32, 33 übertragen.

Die Vorspannung kann durch ein gesondertes Federelement oder durch die dem Betätigungsorgan 31 inhärente Elastizität erzeugt werden.

Das Pilotventil 5 gemäß den Figuren 4 bis 6 eignet sich insbesondere zur Ansteuerung der Hauptventile 2, 3 gemäß Figur 2 und 3. Die beiden Arbeitskammern 13, 14 werden nur dann druckentlastet, wenn das Betätigungsorgan 31 schwingt. Wenn es nicht oszilliert sondern in der einen oder anderen Position gemäß Figur 5 oder Figur 6 verharrt, ist zumindest eines der Hauptventile 2, 3 geschlossen. Somit führt jeder Ausfall der Steuerungseinrichtung 35 zum Schließen zumindest eines der Ventile 2, 3. Spätestens wenn das piezoelektrische Betätigungsorgan 31 durch externe Widerstände, durch Innenwiderstand oder sonstige Maßnahmen entladen worden ist, und den Zustand nach Figur 4 annimmt, sind beide Hauptventile 2, 3 geschlossen.

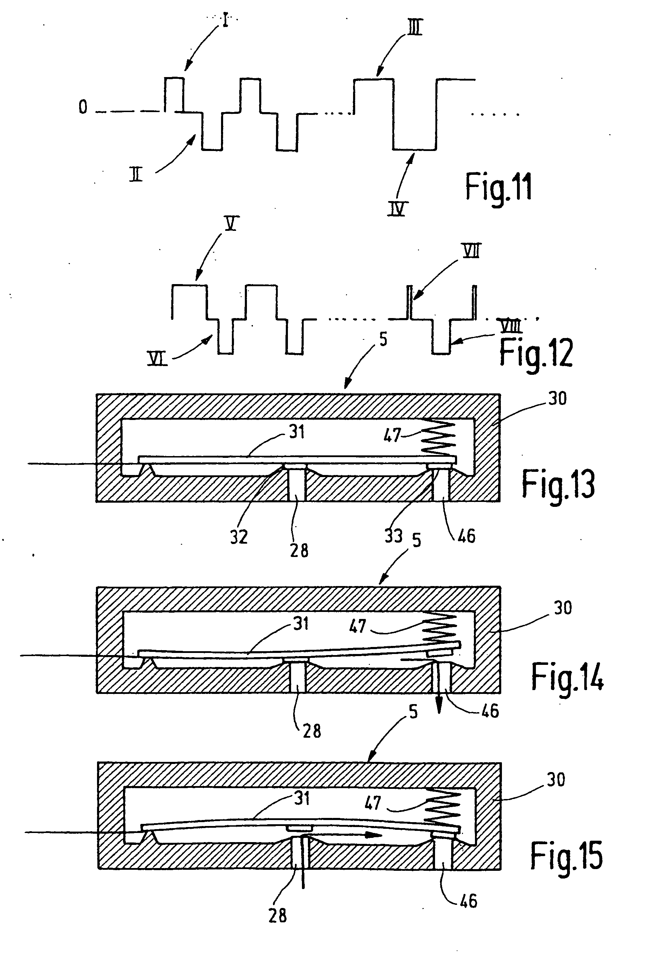

Die Ansteuerung des Betätigungsorgans 31 kann mit einer Wechselspannung gemäß Figur 11 und 12 erfolgen. Die Wechselspannung ist vorzugsweise bipolar, d.h. sie weist bezüglich der Bezugsspannung Null eine positive Welle I und eine negative Welle II auf. Die positive Welle I steuert z.B. die Biegung des Betätigungsorgans 31 gemäß Figur 5 während die negative Welle II die Biegung des Betätigungsorgans 31 gemäß Figur 6 beeinflusst. Beide Wellen I, II können hinsichtlich ihres Puls-Pause-Verhältnisses moduliert werden, wie die Wellenzüge III, IV zeigen. Wie Figur 12 veranschaulicht, können die Wellenzüge V, VI unterschiedliche Puls-Pause-Verhältnisse annehmen. Entsprechend sind die Gasabflüsse durch die Eingänge 28, 29 unabhängig voneinander steuerbar. Beispielsweise kann, wie die Wellen VII, VIII zeigen, auf Öffnung eines der Ventile nahezu oder auch ganz verzichtet werden, so dass das Betätigungsorgan 31 nur noch eines der Hauptventile 2, 3 öffnet und das andere geschlossen lässt.

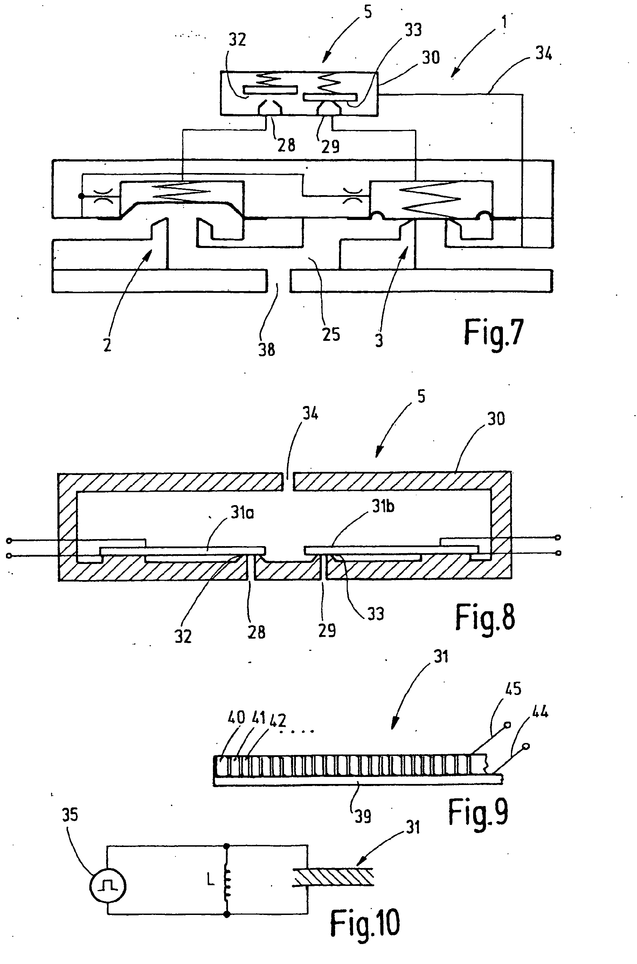

Letzteres kann bei der abgewandelten Ausführungsform der Ventilanordnung 1 nach Figur 7 Anwendung finden. Bei dieser wird aus der Zwischenkammer 25 über einen Anschluss 38 Zündgas ausgeleitet. Das Pilotventil 5 wird oszillierend betätigt, wobei die Steuerwechselspannung z.B. gemäß Figur 12 derart asymmetrisch ist, dass nur noch das stromaufwärtige Hauptventil 2 geöffnet wird, das Hauptventil 3 jedoch geschlossen bleibt. Über den Anschluss 38 kann Zündgas ausgeleitet werden, wobei zudem die Zündgasmenge durch Modulation der Öffnung des Hauptventils 2 steuerbar ist. Die Modulation kann durch Festlegung eines geeigneten Tastverhältnisses des Kurvenzugs VIII (Figur 12) vorgenommen werden, der zum Steuern des Hauptventils 2 dient.

Figur 8 veranschaulicht eine Ausführungsform für ein Pilotventil 5, das zwei Betätigungsorgane 31a, 31b aufweist, die unabhängig voneinander ansteuerbar und an entsprechende Ausgänge der Steuereinrichtung 35 angeschlossen sind. Beide Steuerorgane 31a, 31b weisen jeweils zum Verschluss des ihnen zugeordneten Eingangs 28, 29 die bereits diskutierten Flächen 32, 33 auf. In entspanntem Zustand schließen die Betätigungsorgane 31a, 31b die Eingänge 28, 29. Zum Ansteuern, d.h. Freigeben der Eingänge 28, 29 werden die Betätigungsorgane 31a, 31b jeweils in oszillierende Bewegung versetzt, wobei über die Frequenz und/oder das Tastverhältnis und/oder die Amplitude der Strömungswiderstand an dem jeweiligen Ventilsitz reguliert wird. Ansonsten gilt die vorige Beschreibung.

Figur 9 veranschaulicht den Aufbau des Betätigungsorgans 31 in einem Ausführungsbeispiel. Es besteht aus einem Träger 39, der länglich und streifenförmig ausgebildet und in Figur 9 horizontal angeordnet ist. Der biegbare, jedoch kaum dehnbare, d.h. dehnsteife Träger 39 ist beispielsweise eine Metallzunge oder auch eine Keramikzunge. Auf diese ist eine Stapelstruktur bestehend aus einzelnen Piezoelementen 40, 41, 42 usw. aufgebracht, die bei Spannungsbeaufschlagung ihre Dicke ändern, die bezogen auf die in Figur 9 horizontale Längsrichtung des Trägers 39 parallel zu dieser gemessen wird. Die einzelnen Piezoelemente 40 bis 42 sind durch Isolatorschichten voneinander getrennt und jeweils mit zwei Elektroden versehen. Die in Figur 9 linken Elektroden sind jeweils an einen ersten Leiter 44 angeschlossen. Die in Figur 9 rechten Elektroden-jedes Piezoelementes 40 bis 42 sind an einen zweiten Leiter 45 angeschlossen. Zwischen den kammartig ineinander greifenden Elektroden der Leiter 44, 45 sind abwechselnd die Piezoelemente 40, 41, 42 und dazwischen jeweils die genannten Isolierschichten vorgesehen.

Ein solcher Stapelaufbau weist bei geringen angelegten Steuerspannungen eine relativ große Längenänderung auf, die durch die feste Verbindung zu dem Träger 39 in eine Biegebewegung umgesetzt wird.

Figur 10 veranschaulicht die elektrische Beschaltung des piezoelektrischen Betätigungsorgans 31, das äußere Elektroden aufweist und selbst ein schwingfähiges System bildet. Es ist außen mit einer Induktivität L verbunden, um mit der Kapazität des Betätigungselements 31 einen Schwingkreis zu bilden, dessen Resonanzfrequenz auf oder unterhalb der Frequenz der angeschlossenen, von der Steuereinrichtung 35 abgegebenen Wechselspannung liegt. Bei Wegfall der Erregung durch die Steuereinrichtung 35 schließt das induktive Element L das Betätigungsorgan 31 kurz, d.h. es bewirkt dessen Entladung und somit die Rückkehr in seine gestreckte Lage, in der die angeschlossenen Ventile geschlossen sind.

Die Figuren 13 bis 15 veranschaulichen eine weitere fortentwickelte Ausführungsform des Pilotventils 5, das zur Steuerung eines einzelnen Hauptventils 2 wie auch in doppelter Ausführung zur Steuerung zweier Hauptventile 2, 3 genutzt werden kann. Es kann überdies zur direkten Steuerung relativ kleiner, beispielsweise hochenergetischer Gasflüsse, z.B. bei kleinen Propangasgeräten, dienen. Dieses Pilotventil 5 stimmt in seinem Aufbau weitgehend mit dem Pilotventil 5 nach den Figuren 4 bis 6 überein, wobei jedoch der zu der Leitung 34 führende Ausgang fehlt. Von den Anschlüssen 28, 29 ist beispielsweise der Anschluss 28 wie gehabt der Eingang während der andere, vorstehend ebenfalls als Eingang bezeichnete Anschluss 29, nunmehr mit 46 bezeichnet ist und einen Ausgang bildet. Ansonsten gilt die vorige Beschreibung uneingeschränkt. Im Ruhezustand schließt das Betätigungsorgan 31 mit seinen Flächen 32, 33 sowohl den Eingang 28 als auch den Ausgang 46. Das Betätigungsorgan 31 liegt dabei unter Vorspannung an den entsprechenden Ventilsitzen an. Die Vorspannung wird durch eine in den Figuren 13 bis 15 eingezeichnete Feder 47 bewirkt, wobei diese Feder sowohl als gesondertes Element ausgebildet und vorgesehen sein als auch durch die Vorspannung des Betätigungselements 31 selbst gebildet sein kann.

Der Eingang 28 und der Ausgang 46 können nicht gleichzeitig freigegeben werden. Sie können nur alternierend öffnen, indem das Betätigungsorgan 31 nach der einen oder nach der anderen Richtung ausgelenkt wird. Figur 14 veranschaulicht die Freigabe des Ausgangs 46 bei gleichzeitig geschlossenem Eingang 28. Figur 15 veranschaulicht hingegen die Freigabe des Eingangs 28 bei gleichzeitigem Verschluss des Ausgangs 46.

### Dieses Pilotventil 5 arbeitet wie folgt:

Im Ruhezustand ist das Betätigungsorgan 31 nicht erregt. Es schwingt nicht. Das Pilotventil 5 ist insgesamt geschlossen. Wird nun eine bipolare Wechselspannung, beispielsweise nach einer der Kurvenformen gemäß Figur 11 oder 12 an das Betätigungsorgan 31 angelegt, oszilliert dieses, wobei abwechselnd der Eingang 28 und der Ausgang 46 öffnen. In der in Figur 15 veranschaulichten Phase einer Polarität gelangt unter Druckerhöhung eine Gasportion in das Innenvolumen des Gehäuses 30 hinein. Wechselt das Ansteuersignal seine Polarität schwingt das Betätigungsorgan 31 in seine andere Lage, gemäß Figur 14. Es wird nun der Eingang 28 geschlossen und der Ausgang 46 geöffnet, wodurch die von dem Gehäuse 30 aufgenommene Gasportion unter Druckerniedrigung wieder über den Ausgang 46 abgegeben wird.

Die Ansteuerung dieses Pilotventils 5 erfolgt vorzugsweise mit einer symmetrischen Wechselspannung, beispielsweise gemäß Figur 11 rechts. Soll der Gasfluss gedrosselt werden, wird beispielsweise zu einer Kurvenform gemäß Figur 11 links übergegangen, wodurch die Öffnungszeiten von Eingang 28 und Ausgang 46 geringer und somit die durchgelassenen Gasportionen kleiner werden. Somit lässt sich der Gasfluss durch das Pilotventil 5 stufenlos steuern.

Des Weiteren ist es möglich, den Gasfluss durch Vergrößerung oder Verminderung der Ansteuerfrequenz und somit der Schwingfrequenz des Betätigungsorgans 31 zu steuern. Nachdem bei jedem Schwingungszyklus genau eine Gasportion durchgelassen wird, wird der Gasfluss mit zunehmender Frequenz größer. Ebenso kann er in geringem Maß durch eine Beeinflussung der Schwingungsamplitude beeinflusst werden.

Das Pilotventil 5 nach den Figuren 13 bis 15 ist eigensicher. Es kann weder durch vorwärts noch durch rückwärts anliegenden Gasdruck geöffnet werden. Es ist jeweils mindestens eines der beiden Teilventile an dem Eingang 28 oder Ausgang 46 geschlossen. Außerdem kann es weder geöffnet werden, indem eine Gleichspannung in der einen oder der anderen Richtung (Polarität) angelegt wird. Zum Freigeben eines Gasflusses ist das Anliegen einer Wechselspannung erforderlich, die zu einer ausreichend großen Oszillation des Betätigungsorgans 31 vorzugsweise im Ultraschallbereich führt. Das Pilotventil 5 eignet sich zur Dosierung kleiner Gasflüsse oder anderer kompressibler fluider Medien. Inkompressible Medien (Wasser, Öl) können mit diesem Ventil gesteuert werden, wenn das Gehäuse 30 elastisch ist, einen elastischen Abschnitt aufweist oder wenn ein sonstiger elastischer Puffer zwischen dem Eingang und dem Ausgang vorhanden ist.

Eine Ventilanordnung weist zur Steuerung ein Pilotventil 5 mit piezoelektrischem Betätigungsorgan 31 auf. Das Pilotventil 5 ist mit einer Wechselspannung angesteuert, so dass dessen Betätigungsorgan 31 schwingt, um einen Gasfluss freizugeben.

## Patentansprüche

1. Ventilanordnung (1), insbesondere Gasventilanordnung,
mit wenigstens einem Hauptventil (2), das ein Ventilverschlussglied (17) aufweist, das mit einer fluidbetätigten Antriebseinrichtung (6) verbunden ist,
mit einem Pilotventil (5), das mit der Antriebseinrichtung (6) verbunden ist, um diese durch einen Pilotfluidfluss zu steuern, und das ein piezoelektrisches Betätigungsorgan (31) zur Beeinflussung des Pilotfluidflusses aufweist, das in einem Gehäuse (30) angeordnet ist und zwei Ventilverschlussflächen (32, 33) trägt, von denen eine einem in das Gehäuse (30) führenden Einlass (28) und die andere einem aus dem Gehäuse (30) heraus führenden Auslass (46) zugeordnet ist, und
mit einer Steuereinrichtung (35), die mit dem Pilotventil (5) verbunden ist und dieses mit einer Wechselspannung beaufschlagt, so dass dessen Betätigungsorgan (31) schwingt, wobei abwechselnd nur der Einlass (28) oder nur der Auslass (46) öffnet um einen Gasfluss freizugeben und um das Hauptventil (2) zu öffnen.

2. Ventilanordnung nach Anspruch 1, **dadurch gekennzeichnet, dass** die Wechselspannung eine Rechtecksignalform aufweist.

3. Ventilanordnung nach Anspruch 2, **dadurch gekennzeichnet, dass** die Steuereinrichtung (35) darauf eingerichtet ist, das Tastverhältnis der Wechselspannung zu modulieren.

4. Ventilanordnung nach Anspruch 1, **dadurch gekennzeichnet, dass** dem piezoelektrischen Betätigungsorgan (31) ein induktives Bauelement (L) parallel geschaltet ist.

5. Ventilanordnung nach Anspruch 4, **dadurch gekennzeichnet, dass** die Wechselspannung eine Frequenz aufweist, die mit der Resonanzfrequenz des aus dem piezoelektrischen Betätigungsorgan (31) und dem induktiven Bauelement (L) gebildete Parallelschwingkreis (31, L) übereinstimmt oder oberhalb derselben liegt.

6. Ventilanordnung nach Anspruch 1, **dadurch gekennzeichnet, dass** die Frequenz der Wechselspannung oberhalb oder unterhalb der hörbaren Tonfrequenz liegt.

7. Ventilanordnung nach Anspruch 1, **dadurch gekennzeichnet, dass** das piezoelektrische Bauelement (31) ein Biegeschwinger ist.

8. Ventilanordnung nach Anspruch 7, **dadurch gekennzeichnet, dass** der Biegeschwinger einen Piezoelementestapel (41, 42, 43) aufweist, dessen Länge piezoelektrisch veränderlich ist.

9. Ventilanordnung nach Anspruch 8, **dadurch gekennzeichnet, dass** der Piezoelementestapel (41, 42, 43) an einer Seite mit einem dehnsteifen Trägerelement (39) verbunden ist, das sich parallel zu der Längsrichtung des Piezoelementestapels (41, 42, 43) erstreckt.

10. Ventilanordnung nach Anspruch 1, mit zwei hintereinander angeordneten Hauptventilen (2, 3), die beide jeweils von einer fluidbetätigten Antriebseinrichtung (6, 7) gesteuert sind.

11. Ventilanordnung nach Anspruch 10, **dadurch gekennzeichnet, dass** das Pilotventil (5) zwei alternierend freigebbare Anschlüsse (28, 46) aufweist, die mit den Antriebseinrichtungen (6, 7) der Hauptventile (2, 3) verbunden sind.

12. Ventilanordnung nach Anspruch 1, **dadurch gekennzeichnet, dass** das piezoelektrische Betätigungsorgan (31) des Pilotventils (5) beide Anschlüsse (28, 46) des Pilotventils (5) steuert.

13. Ventilanordnung nach Anspruch 12, **dadurch gekennzeichnet, dass** das piezoelektrische Betätigungsorgan (31) ein Biegeschwinger ist, der zur Freigabe eines der Anschlüsse (28, 46) nach einer ersten Richtung ausgelenkt und zur Freigabe des anderen Anschlusses (28, 46) nach der anderen Richtung ausgelenkt wird, so dass jeweils nur entweder der eine oder der andere Anschluss freigegeben ist.

14. Ventilanordnung nach Anspruch 12, **dadurch gekennzeichnet, dass** das piezoelektrische Betätigungsorgan (31) an voneinander beabstandeten Stellen an ein und derselben Seite Ventilverschlussflächen (32, 33) trägt.

15. Ventilanordnung nach Anspruch 1, **dadurch gekennzeichnet, dass** die Steuereinrichtung (35) zur Abgabe einer bipolaren Wechselspannung eingerichtet ist.

16. Ventilanordnung nach Anspruch 15, **dadurch gekennzeichnet, dass** die Wechselspannung in zumindest einer Polarität pulsweitenmodulierbar ist.

17. Ventilanordnung nach Anspruch 1, **dadurch gekennzeichnet, dass** in oder an einer auf das Hauptventil (2) folgenden Kammer (25) ein Sensor angeordnet ist, der mit der Steuereinrichtung (35) verbunden ist.

18. Ventilanordnung nach Anspruch 17, **dadurch gekennzeichnet, dass** der Sensor ein Drucksensor ist und dass die Steuereinrichtung mittels des Hauptventils (2) den in der Kammer (25) herrschenden Druck regelt.

19. Ventilanordnung nach Anspruch 10 und 18, **dadurch gekennzeichnet, dass** die Steuereinrichtung (35) das zweite Hauptventil (3) zur Einstellung gewünschter Gasflüsse entsprechend seiner Durchlasskennlinie auf entsprechende, die gewünschten Gasflüsse festlegende Positionen einstellt.

20. Ventilanordnung nach Anspruch 1, **dadurch gekennzeichnet, dass** dem Hauptventil (2) ein elektromagnetisch betätigtes Ventil vor- oder nachgeschaltet ist.

21. Pilotventil zur Steuerung kleiner Gasflüsse, mit einem piezoelektrischen Betätigungselement (31), das in einem Gehäuse (30) angeordnet ist und zwei Ventilverschlussflächen (32, 33) trägt, von denen eine einem in das Gehäuse (30) führenden Einlass (28) und die andere einem aus dem Gehäuse (30) heraus führenden Auslass (46) zugeordnet ist, wobei im Ruhezustand sowohl der Einlass (28) als auch der Auslass (46) durch die Ventilverschlussflächen (32, 33) verschlossen sind und bei Beaufschlagung des Betätigungselements (31) mit Wechselspannung der Einlass (28) und der Auslass (46) oszillierend und nur alternierend freigegeben werden, um einen Gasfluss zu ermöglichen, der von dem Einlass (28) zu dem Auslass (46) führt.

22. Verfahren zur Steuerung einer Ventilanordnung mit wenigstens einem Hauptventil (2) und wenigstens einem dieses steuernden Pilotventil (5) gemäß Anspruch 21, bei dem das Pilotventil (5) zum Öffnen des Hauptventils (2) durch Anlegen einer Wechselspannung zwischen Offenstellung und Schließstellung oszillierend betrieben wird, so dass abwechselnd nur sein Eingang (28) oder sein Ausgang (46) freigegeben werden, um bei jeder Öffnung des Eingangs (28) eine kleine Gasportion in seinen Innenraum einzulassen und bei Schließen des Eingangs (28) und Öffnen des Ausgangs (46) diese Gasportion aus dem Ausgang (46) wieder auszulassen.

## Claims

1. Valve arrangement (1), in particular a gas valve arrangement,
with at least one main valve (2) having a valve closing member (17), which is connected to a fluid-operated drive means (6),
with a pilot valve (5), which is connected to the drive means (6) in order to control this by means of a pilot fluid flow and which has a piezoelectric operating member (31) for influencing the pilot fluid flow, said operating member being arranged in a housing (30) and bearing two valve closing faces (32, 33), of which one is associated with an inlet (28) leading into the housing (30) and the other is associated with an outlet (46) leading out of the housing (30), and
with a control means (35), which is connected to the pilot valve (5) and applies an alternating voltage to this, so that its operating member (31) oscillates, wherein alternately only the inlet (28) or only the outlet (46) opens to release a gas flow and to open the main valve (2).

2. Valve arrangement according to claim 1, **characterised in that** the alternating voltage has a square wave signal form.

3. Valve arrangement according to claim 2, **characterised in that** the control means (35) is arranged to modulate the duty factor of the alternating voltage.

4. Valve arrangement according to claim 1, **characterised in that** an inductive structural element (L) is connected in parallel to the piezoelectric operating member (31).

5. Valve arrangement according to claim 4, **characterised in that** the alternating voltage has a frequency, which is consistent with the resonance frequency of the parallel oscillatory circuit (31, L) formed from the piezoelectric operating member (31) and the inductive structural element (L) or lies above this.

6. Valve arrangement according to claim 1, **characterised in that** the frequency of the alternating voltage lies above or below the audible audio frequency.

7. Valve arrangement according to claim 1, **characterised in that** the piezoelectric structural element (31) is a flexural resonator.

8. Valve arrangement according to claim 7, **characterised in that** the flexural resonator has a piezoelectric element stack (41, 42, 43), the length of which is piezoelectrically variable.

9. Valve arrangement according to claim 8, **characterised in that** the piezoelectric element stack (41, 42, 43) is connected on one side to an expansion-resistant support element (39), which extends parallel to the longitudinal direction of the piezoelectric element stack (41, 42, 43).

10. Valve arrangement according to claim 1, with two main valves (2, 3) arranged one behind the other, both of which are respectively controlled by a fluid-operated drive means (6, 7).

11. Valve arrangement according to claim 10, **characterised in that** the pilot valve (5) has two alternately releasable connections (28, 46), which are connected to the drive means (6, 7) of the main valves (2, 3).

12. Valve arrangement according to claim 1, **characterised in that** the piezoelectric operating element (31) of the pilot valve (5) controls both connections (28, 46) of the pilot valve (5).

13. Valve arrangement according to claim 12, **characterised in that** the piezoelectric operating member (31) is a flexural resonator, which is deflected in a first direction to release one of the connections (28, 46) and is deflected in another direction to release the other connection (28, 46), so that only either one or the other connection is respectively released.

14. Valve arrangement according to claim 12, **characterised in that** the piezoelectric operating member (31) bears valve closing faces (32, 33) on one and the same side at locations spaced from one another.

15. Valve arrangement according to claim 1, **characterised in that** the control means (35) is arranged to deliver a bipolar alternating voltage.

16. Valve arrangement according to claim 15, **characterised in that** the alternating voltage can be pulse-width modulated in at least one polarity.

17. Valve arrangement according to claim 1, **characterised in that** a sensor, which is connected to the control means (35), is arranged in or at a chamber (25) downstream of the main valve (2).

18. Valve arrangement according to claim 17, **characterised in that** the sensor is a pressure sensor, and that the control means regulates the pressure prevailing in the chamber (25) by means of the main valve (2).

19. Valve arrangement according to claim 10 and 18, **characterised in that** the control means (35) adjusts the second main valve (3) to corresponding positions defining desired gas flows for adjustment of the desired gas flows in accordance with its transmission characteristic.

20. Valve arrangement according to claim 1, **characterised in that** an electromagnetically operated valve is connected in front of or behind the main valve (2).

21. Pilot valve for controlling small gas flows, with a piezoelectric operating element (31), which is arranged in a housing (30) and bears two valve closing faces (32, 33), of which one is associated with an inlet (28) leading into the housing (30) and the other is associated with an outlet (46) leading out of the housing (30), wherein in the resting state both the inlet (28) and the outlet (46) are closed by the valve closing faces (32, 33) and when alternating voltage is applied to the operating element (31) the inlet (28) and the outlet (46) are only alternately released by oscillation to allow a gas flow, which leads from the inlet (28) to the outlet (46).

22. Method for controlling a valve arrangement with at least one main valve (2) and at least one pilot valve (5) controlling this according to claim 21, in which to open the main valve (2) the pilot valve (5) is operated to oscillate between the open position and the closed position by application of an alternating voltage, so that only its inlet (28) or its outlet (46) is alternately released in order to admit a small portion of gas into its interior each time the inlet (28) is opened and to discharge this gas portion from the outlet (46) again when the inlet (28) is closed and the outlet (46) is opened.

## Revendications

1. Dispositif de vannes (1), en particulier dispositif de vannes à gaz,
comprenant au moins une vanne principale (2) qui présente un organe obturateur de vanne (17), lequel est relié à un dispositif d'entraînement (6) actionné par un fluide,
comprenant une vanne pilote (5) qui est connectée au dispositif d'entraînement (6), afin de le commander par un flux de fluide pilote, et qui présente un organe d'actionnement piézoélectrique (31) qui est destiné à agir sur le flux de fluide pilote et est placé dans un corps (30) et porte deux surfaces d'obturation de vanne (32, 33) dont une est associée à une entrée (28) menant dans le corps (30) et l'autre est associée à une sortie (46) du corps (30), et
comprenant un dispositif de commande (35) qui est connecté à la vanne pilote (5) qu'il alimente avec une tension alternative, de manière à faire osciller l'organe d'actionnement (31) de cette vanne, ouvrant en alternance uniquement l'entrée (28) ou uniquement la sortie (46) pour libérer un flux de gaz et pour ouvrir la vanne principale (2).

2. Dispositif de vannes selon la revendication 1, **caractérisé par le fait que** la tension alternative présente une forme à signaux carrés.

3. Dispositif de vannes selon la revendication 2, **caractérisé par le fait que** le dispositif de commande (35) est conçu pour moduler le rapport cyclique de la tension alternative.

4. Dispositif de vannes selon la revendication 1, **caractérisé par le fait qu'**un composant inductif (L) est monté en parallèle avec l'organe d'actionnement piézoélectrique (31).

5. Dispositif de vannes selon la revendication 4, **caractérisé par le fait que** la tension alternative présente une fréquence qui correspond à la fréquence de résonance du circuit oscillant parallèle (31, L), constitué de l'organe d'actionnement piézoélectrique (31) et du composant inductif (L), ou est supérieure à cette fréquence.

6. Dispositif de vannes selon la revendication 1, **caractérisé par le fait que** la fréquence de la tension alternative est supérieure ou inférieure à la fréquence acoustique audible.

7. Dispositif de vannes selon la revendication 1, **caractérisé par le fait que** le composant piézoélectrique (31) est un résonateur de flexion.

8. Dispositif de vannes selon la revendication 7, **caractérisé par le fait que** le résonateur de flexion comporte un empilement d'éléments piézoélectriques (41, 42, 43) dont la longueur peut être modifiée par voie piézoélectrique.

9. Dispositif de vannes selon la revendication 8, **caractérisé par le fait que** l'empilement d'éléments piézoélectriques (41, 42, 43) est relié sur un côté à un élément support (39) rigide à l'extension, qui s'étend parallèlement à la longueur de l'empilement d'éléments piézoélectriques (41, 42, 43).

10. Dispositif de vannes selon la revendication 1, comprenant deux vannes principales (2, 3) qui sont installées l'une à la suite de l'autre et sont commandées respectivement par un dispositif d'entraînement (6, 7) actionné par un fluide.

11. Dispositif de vannes selon la revendication 10, **caractérisé par le fait que** la vanne pilote (5) comporte deux orifices (28, 46) qui peuvent être libérés en alternance et sont connectés aux dispositifs d'entraînement (6, 7) des vannes principales (2, 3).

12. Dispositif de vannes selon la revendication 1, **caractérisé par le fait que** l'organe d'actionnement piézoélectrique (31) de la vanne pilote (5) commande les deux orifices (28, 46) de la vanne pilote (5).

13. Dispositif de vannes selon la revendication 12, **caractérisé par le fait que** l'organe d'actionnement piézoélectrique (31) est un résonateur de flexion qui est dévié dans une première direction pour libérer l'un des orifices (28, 46) et est dévié dans l'autre direction pour libérer l'autre orifice (28, 46), de sorte que chaque fois uniquement soit l'un soit l'autre orifice est libéré.

14. Dispositif de vannes selon la revendication 12, **caractérisé par le fait que** l'organe d'actionnement piézoélectrique (31) porte des surfaces d'obturation de vanne (32, 33) à des emplacements espacés, situés sur la même face.

15. Dispositif de vannes selon la revendication 1, **caractérisé par le fait que** le dispositif de commande (35) est conçu pour délivrer une tension alternative bipolaire.

16. Dispositif de vannes selon la revendication 15, **caractérisé par le fait que** la tension alternative peut être modulée en largeur d'impulsion, au moins dans une polarité.

17. Dispositif de vannes selon la revendication 1, **caractérisé par le fait que** dans ou sur une chambre (25) placée à la suite de la vanne principale (2), il est prévu un capteur qui est connecté au dispositif de commande (35).

18. Dispositif de vannes selon la revendication 17, **caractérisé par le fait que** le capteur est un capteur de pression et que le dispositif de commande régule à l'aide de la vanne principale (2) la pression qui règne dans la chambre (25).

19. Dispositif de vannes selon les revendications 10 et 18, **caractérisé par le fait que** pour l'obtention de flux de gaz souhaités, le dispositif de commande (35) règle la deuxième vanne principale (3) sur des positions correspondantes, déterminant les flux de gaz souhaités, en fonction de sa caractéristique de passage.

20. Dispositif de vannes selon la revendication 1, **caractérisé par le fait qu'**une vanne à commande électromagnétique est placée en amont ou en aval de la vanne principale (2).

21. Vanne pilote destinée à contrôler de faibles flux de gaz, comprenant un organe d'actionnement piézoélectrique (31) qui est placé dans un corps (30) et porte deux surfaces d'obturation de vanne (32, 33), dont une est associée à une entrée (28) menant dans le corps (30) et l'autre est associée à une sortie (46) du corps (30), sachant qu'à l'état de repos aussi bien l'entrée (28) que la sortie (46) sont fermées par les surfaces d'obturation de vanne (32, 33), et que lors de l'application d'une tension alternative à l'organe d'actionnement (31), l'entrée (28) et la sortie (46) sont libérées par oscillation et uniquement de façon alternée, afin d'autoriser un écoulement de gaz menant de l'entrée (28) à la sortie (46).

22. Procédé de commande d'un dispositif de vannes comprenant au moins une vanne principale (2) et au moins une vanne pilote (5) commandant celle-ci, selon la revendication 21, où la vanne pilote (5), pour ouvrir la vanne principale (2), est actionnée de façon oscillatoire entre une position ouverte et une position fermée, par application d'une tension alternative, de sorte que soit libérée en alternance uniquement son entrée (28) ou sa sortie (46), afin d'admettre une petite portion de gaz dans sa cavité lors de chaque ouverture de l'entrée (28) et de laisser sortir cette portion de gaz par la sortie (46) lors de la fermeture de l'entrée (28) et de l'ouverture de la sortie (46).
